# EUROPÄISCHE PATENTSCHRIFT

(11) **EP 0 374 433 B1**
(45) Veröffentlichungstag und Bekanntmachung des Hinweises auf die Patenterteilung: **08.06.1994**
(21) Anmeldenummer: 89119899.6
(22) Anmeldetag: 26.10.1989
(51) Int. Cl.: H04N 5/60

(54) **Fernsehempfänger mit digitaler und analoger Tonsignalverarbeitung**
Television receiver with digital and analog audio signal processing
Récepteur de télévision avec traitement numérique et analogique du signal audio

(30) Priorität: 16.12.1988 DE 3842411
(43) Veröffentlichungstag der Anmeldung: 27.06.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Rosenberger, Winfried GRUNDIG E.M.V., Kurgartenstrasse 37 D-8510 Fuerth (DE)

(56) Entgegenhaltungen:
- IERE Juni 1987, Seiten 119-124, Montreux, CH; A.P. ROBINSON: "Nicam 728 digital two-channel sound with terrestrial television. transmitter performance and parameters to be measured"
- IEEE TRANSACTIONS ON CONSUMER ELECTRONICS Band 34, Nr. 3, August 1988, Seiten 625-632, New York, US; Y. YAMAMOTO et al.: "A new audio processor for EIAJ MTS"
- TELEVISION Band 38, Nr. 5, März 1988, Seiten 366-369, London, GB; G. LEWIS: "Dual-channel TV sound systems"

## Beschreibung

Die Erfindung betrifft eine Einrichtung zum Verarbeiten von digitalen Tonsignalen, die nach dem NICAM-System übertragen werden.

Eine derartige Einrichtung ist aus dem Artikel "Dual-channel TV sound systems" von G. Lewis, Television, Band 38, Nr. 5, März 1988, Seiten 366- 369 bekannt.

Mit dieser Einrichtung konnen sowohl digitale als auch analoge Tonsignale verarbeitet werden, wobei die digitalen Tonsignale nach dem NICAM-System (NICAM steht als Abkürzung für Near Instantaneous Companded Audio Multiplex) und die analogen Tonsignale mit herkömmlichen Methoden übertragen und empfangen werden.

Das empfangene Tonsignal wird in Zwischenfrequenzlage ausgekoppelt und einerseits als Analogsignal auf bekannte Weise weiterverarbeitet und andererseits auf eine Schaltungsanordnung zur Verarbeitung eines digitalen Signals, d.h. einer NICAM-Decoder-Einheit, geführt.

In dieser Einheit wird das Signal überprüft, ob es sich um ein digitales NICAM-Signal und/oder um ein analoges FM-Signal handelt. Es wird dort weiterhin festgestellt, ob bei Vorliegen eines NICAM-Signals die Fehlerrate nicht zu groß für eine weitere Verarbeitung ist. Ein Microprozessor, der die Verarbeitung des NICAM-Signals steuert, entscheidet dann über die weitere Verarbeitung dadurch, daß er ein Schaltsignal ausgibt, mit dem das ausgewählte Tonsignal durchgeschaltet wird.

Der Erfindung liegt die Aufgabe zugrunde, den Empfang digitaler Tonsignale so zu gestalten, daß die erfindungsgemäße Einrichtung mit den zur herkömmlichen Tonverarbeitung verwendeten Einrichtung kompatibel und für ältere Geräte nachrüstbar ist.

Die Aufgabe wird erfindungsgemäß dadurch gelest, daß der Microprozessor ein Mehr-Pegel-Signal erzeugt, das angibt, ob die empfangene Sendung in Mono, Stereo oder zweisprachig empfangen wird und im Mikroprozessor überprüft wird ob das NICAM-Signal die gleiche Information enthält wie der Analogkanal.

Das Mehr-Pegel-Signal dient vorzugsweise zur Ansteuerung einer Sichtanzeige, die dem Benutzer die Art des empfangenen Signals angibt.

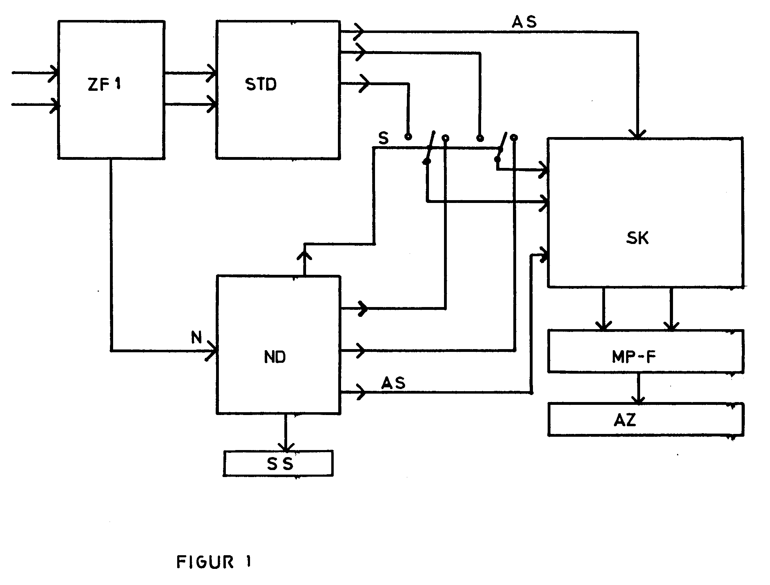

Weiterhin kann über eine Schnittstelle SS nach Figur 1 für externe Geräte das aufbereitete Tonsignal vor der Digital-Analog-Wandlung ausgekoppelt werden, um zum Beispiel einem digitalen Aufzeichnungsgerät zugeführt zu werden.

Die Einrichtung wird im folgenden an Hand von Blockschaltbildern näher erläutert:
- In Figur 1: ist ein Blockschaltbild des ZF-Verstärkers/Stereodecoders,
- in Figur 2: ein Blockschaltbild der NICAM-Decoder-Einheit dargestellt.

Figur 1 zeigt die Einbindung der NICAM-Decoder-Einheit ND in die Tonverarbeitungseinheit eines Fernsehgerätes. Es wird dasjenige ZF-Signal, das eine Information nach dem NICAM-System tragen kann, zusätzlich zur NICAM-Decoder-Einheit geführt. Das ZF-Signal wird also zunächst in ZF1 parallel als Analog- und als Dialogton-Signal verarbeitet. Im NICAM-Decoder ND wird festgestellt, ob das empfangene Signal nach dem NICAM-System und/oder nach herkömmlicher Art übertragen wurde. Wenn das Signal ein NICAM-Signal ist, wird auch überprüft, ob die Fehlerrate nicht zu groß ist. Erkennt die NICAM-Decoder-Einheit ND, daß ein Analogsignal oder ein schlechtes NICAM-Signal vorliegt, dann steuert sie einen Schalter S an, der das im Stereodecoder STD verarbeitete analoge Signal durchschaltet, das dann im Fernsehstereoklangregler SK weiterverarbeitet wird. Liegt im anderen Fall ein brauchbares NICAM-Signal vor, wird mit dem Schalter S das in der NICAM-Decoder-Einheit ND verarbeitete digitale Tonsignal weitergegeben. In diesem Fall wird zusätzlich ein Vier-Pegel-Signal ausgegeben, daß über den Fernsehstereoklangregler SK an den Haupt-Prozessor MP-F des Fernsehgerätes gegeben wird. Das Vier-Pegel-Signal kennzeichnet, ob eine Sendung in Monoton, Stereoton oder zweisprachig empfangen wird. Entsprechende Zeichen werden dann an die Sichtanzeige AZ des Fernsehgerätes ausgegeben.

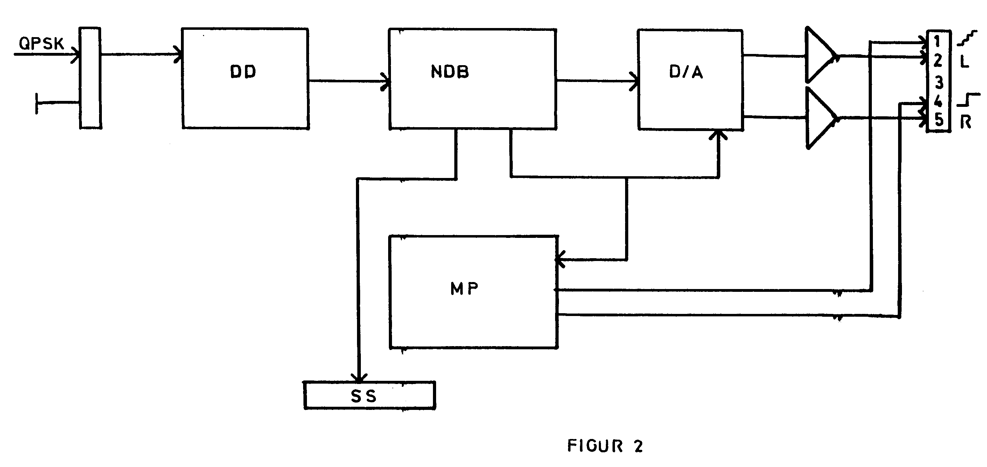

Der Aufbau des NICAM-Decoders wird an Hand der Figur 2 näher erläutert:
An die NICAM-Decoder-Einheit gelangt zunächst das QPSK-Signal (QPSK steht abgekürzt für Ouadrature Phase Shift Keying), das in einem entsprechenden ersten Decoder- und Demodulator-Baustein DD in eine Binärsignal umgewandelt wird. Dieses wird einem NICAM-Decoder-Baustein NDB zugeführt. Dieser Baustein erkennt an Hand der Struktur des Binärsignals, ob das empfangene Signal nach dem NICAM-System übertragen wurde. Bei Vorliegen eines NICAM-Signals erkennt der Decoder-Baustein durch mitübertragene Informationsbits, ob eine Sendung in Mono, Stereo oder zweisprachig gesendet wird, und ob im Analog-Kanal die gleiche Information übertragen wird. Weiterhin wird erkannt, ob die Fehlerrate für ein gutes Tonsignal ausreichend klein ist. Die Toninformation wird nun an einen Digital-Analog-Wander gegeben, der sie in ein analoges Audiosignal wandelt. Die Informationen gehen an den Microprozessor MP, der sie auswertet und die notwendigen Signale zum Schalten bzw. zur Sichtanzeige erzeugt. Der Microprozessor gibt das Vier-Pegel-Signal aus, das kompatibel ist zum entsprechenden Anzeige-Signal bei analogen Tonsignalen, und ein Schaltsignal zum Durchschalten des digitalen bzw. des analogen Tonsignals. Im Falle eines schlechten NICAM-Signals überprüft der NICAM-Microprozessor auch noch, ob das Analog-Signal das gleiche Tonsignal überträgt, wie der NICAM-Kanal.

Der zusätzliche Microprozessor ist notwendig beim nachträglichen Einbau der NICAM-Decoder-Einheit in ein Fernsehgerät, sonst übernimmt der Hauptprozessor des Fernsehgerätes seine Aufgabe.

Das digitale Tonsignal wird weiterhin auf eine Schnittstelle SS gegeben, von der andere Geräte, insbesondere ein digitales Aufzeichnungsgerät gespeist werden kann. Auf diese Weise kann das Audiosignal direkt in Digitalqualität, ohne Analogwandlung, mit entsprechenden Geräten aufgezeichnet werden. Gegebenenfalls können durch diese Schnittstelle auch Daten, die zusätzlich mit dem NICAM-Signal übertragen werden, ausgekoppelt werden.

## Patentansprüche

1. Einrichtung zum Verarbeiten von digitalen Tonsignalen nach dem NICAM-System, die auch Tonsignale nach dem herkömmlichen analogen System weiterverarbeitet, in einem Fernsehempfänger, mit einer Schaltungsanordnung (ND,NDB), die das Vorhandensein eines digitalen NICAM-Tonsignals detektiert, und die detektiert, ob die Güte des NICAM-Tonsignals für eine Verarbeitung ausreicht, worin in einem Microprozessor (MP) überprüft wird, ob im Analogkanal die gleiche Information übertragen wird, die auch das NICAM-Signal enthält,
der Microprozessor (MP) einen Schalter (S) ansteuert, der je nach Art und Güte des Tonsignals auf NICAM-Betrieb oder auf herkömmliche Tonsignalverarbeitung umschaltet, und
der Microprozessor (MP) ein Mehr-Pegel-Signal erzeugt, welches kennzeichnend dafür ist, ob eine Sendung in Monoton, Stereoton oder zweisprachig empfangen wird.

2. Einrichtung nach Anspruch 1,
**dadurch gekennzeichnet,** daß
das Mehr-Pegel-Signal zur Ansteuerung einer Sichtanzeige verwendet wird.

3. Einrichtung nach Anspruch 1 oder 2,
**dadurch gekennzeichnet,** daß
die Schaltungsanordnung (ND) in einen herkömmlichen ZF-Verstärker eingebaut ist und daß die Ausgangssignale kompatibel zur herkommlichen Signalverarbeitung sind.

4. Einrichtung nach einem oder mehreren der Ansprüche 1 bis 3**, dadurch gekennzeichnet,** daß
die Microprozessorsteuerung vom Zentralprozessor des Fernsehgerätes aus erfolgt.

5. Einrichtung nach einem oder mehreren der Ansprüche 1 bis 4, **dadurch gekennzeichnet,** daß
das digitale Fernsehton-Signal ausgekoppelt wird und über eine Schnittstelle (SS) für den Anschluß anderer Geräte, vorzugsweise von digitalen Aufzeichnungsgeräten, als binäre Bitfolge verfügbar ist.

## Claims

1. Device for processing digital sound signals by the NICAM system, which also further processes sound signals by the conventional analog system, in a television receiver, having a circuit arrangement (ND, NDB) which detects the presence of a digital NICAM sound signal and which detects whether the quality of the NICAM sound signal is adequate for processing, wherein it is checked in a microprocessor (MP) whether the same information is being transmitted in the analog channel as that which the NICAM signal contains, the microprocessor (MP) drives a switch (S) which, depending on the type and quality of the sound signal, switches over to NICAM operation or to conventional sound signal processing, and the microprocessor (MP) generates a multi-level signal which is characteristic of whether a transmission is being received in mono sound, stereo sound or in two languages.

2. Device according to Claim 1, characterized in that the multi-level signal is used for driving a visual display.

3. device according to Claim 1 or 2, characterized in that the circuit arrangement (ND) is built into a conventional IF amplifier and in that the output signals are compatible with conventional signal processing.

4. Device according to one or more of Claims 1 to 3, characterized in that the microprocessor control is performed from the central processor of the television set.

5. Device according to one or more of Claims 1 to 4, characterized in that the digital television sound signal is coupled out and is available as a binary bit sequence via an interface (SS) for the connection of other items of equipment, preferably of digital recording equipment.

## Revendications

1. Dispositif pour traiter des signaux audio numériques selon le système NICAM, ce dispositif continuant également à traiter des signaux audio selon le système analogique usuel, dans un récepteur de télévision, comportant un montage (ND, NDB), qui détecte la présence d'un signal audio numérique NICAM et qui détermine si la qualité du signal audio NICAM est suffisante pour un traitement, et dans lequel une vérification est exécutée dans un microprocesseur (MP) pour déterminer si la même information, qui contient également le signal NICAM, est transmise dans le canal analogique,
le microprocesseur (MP) commande un commutateur (S), qui en fonction du type et de la qualité du signal audio, réalise une commutation sur le fonctionnement NICAM ou sur le traitement usuel du signal audio, et
le microprocesseur (MP) produit un signal à niveaux multiples qui est caractéristique du fait qu'une émission est reçue en tant que signal audio en monophonie, signal audio en stéréophonie ou bien en deux langues.

2. Dispositif selon la revendication 1, caractérisé en ce que le signal à niveaux multiples est utilisé pour la commande d'un dispositif de visualisation.

3. Dispositif selon la revendication 1 ou 2, caractérisé en ce que le montage (ND) est monté dans un amplificateur usuel de fréquence intermédiaire et que les signaux de sortie sont compatibles pour le traitement usuel des signaux.

4. Dispositif selon une ou plusieurs des revendications 1 à 3, caractérisé en ce que la commande du microprocesseur s'effectue à partir du processeur central de l'appareil de télévision.

5. Dispositif selon une ou plusieurs des revendications 1 à 4, caractérisé en ce que le signal son numérique de télévision est découplé et est disponible sous la forme d'une suite binaire de bits par l'intermédiaire d'une interface (SS) pour le raccordement d'autres appareils, de préférence des appareils d'enregistrement numériques.
